# EUROPEAN PATENT APPLICATION

(11) **EP 4 450 463 A1**
(43) Date of publication of application: **23.10.2024**
(21) Application number: 24162312.3
(22) Date of filing: 08.03.2024
(51) Int. Cl.: C01G 53/00, H01M 4/505

(54) **POSITIVE ELECTRODE ACTIVE MATERIAL, POSITIVE ELECTRODE PLATE, NON-AQUEOUS ELECTROLYTE SECONDARY BATTERY, AND METHOD OF PRODUCING POSITIVE ELECTRODE ACTIVE MATERIAL**

(30) Priority: 17.04.2023 JP 2023067147
(71) Applicant: Prime Planet Energy & Solutions, Inc., Chuo-ku Tokyo 103-0022 (JP)
(72) Inventor: TAKAHASHI, Keiichi, Tokyo, 103-0022 (JP)
(74) Representative: Kuhnen & Wacker Patent- und Rechtsanwaltsbüro PartG mbB

(57) **Abstract**

The present disclosure relates to a positive electrode active material comprising single particles (11) and aggregate particles (12), wherein the single particles (11) and the aggregate particles (12) include a nickel-cobalt-manganese-based compound, the nickel-cobalt-manganese-based compound included in the single particles (11) has a ratio of nickel of 70 mol% or more, the nickel-cobalt-manganese-based compound included in the aggregate particles (12) has a ratio of nickel of 75 mol% or more, the aggregate particles (12) further include a phosphoric acid compound and at least one selected from the group consisting of a lithium-containing metal oxide and lithium borate, and a molar ratio of the lithium-containing metal oxide and the lithium borate with respect to the phosphoric acid compound in the aggregate particles (12) is 5.0 or less.

## Description

### CROSS REFERENCE TO RELATED APPLICATIONS

This nonprovisional application is based on Japanese Patent Application No. 2023-067147 filed on April 17, 2023, with the Japan Patent Office, the entire contents of which are hereby incorporated by reference.

### BACKGROUND OF THE INVENTION

### Field of the Invention

The present disclosure relates to a positive electrode active material, and it also relates to a positive electrode plate, a non-aqueous electrolyte secondary battery, and a method of producing a positive electrode active material.

### Description of the Background Art

Japanese Patent Laying-Open No. 2020-87879 discloses a lithium-metal composite oxide that is formed of secondary particles each of which is an aggregate of primary particles as well as single particles which are present independently of the secondary particles, and it suggests blending the single particles with the secondary particles to achieve a bimodal distribution (a distribution with two peaks) of the circularity of the active material for enhancing packing density.

### SUMMARY OF THE INVENTION

A positive electrode plate that comprises, as a positive electrode active material, single particles and aggregate particles including a nickel-cobalt-manganese-based compound (hereinafter also called a Hi-Ni-based NCM compound) having a high nickel ratio is likely to experience breakage of the aggregate particles in a compression step during production, and the particle breakage can spread at the time of cycle testing. For reducing the particle breakage, researches have been conducted on coating the particle surface with another element, but there is a possibility that the coating can cause lithium extraction from inside the bulk positive electrode active material, which may degrade thermal stability of the positive electrode active material and degrade cycling performance.

An object of the present disclosure is to provide a positive electrode active material which comprises single particles and aggregate particles including a Hi-Ni-based NCM compound and which can achieve both energy density and cycling performance, a positive electrode plate and a non-aqueous electrolyte secondary battery including the same, as well as a method of producing the positive electrode active material.

The present disclosure provides a positive electrode active material, a positive electrode plate, a non-aqueous electrolyte secondary battery, and a method of producing a positive electrode active material as described below.
[1] A positive electrode active material comprising single particles and aggregate particles, wherein
   the single particles and the aggregate particles include a nickel-cobalt-manganese-based compound,
   the nickel-cobalt-manganese-based compound included in the single particles has a ratio of nickel of 70 mol% or more,
   the nickel-cobalt-manganese-based compound included in the aggregate particles has a ratio of nickel of 75 mol% or more,
   the aggregate particles further include a phosphoric acid compound and at least one selected from the group consisting of a lithium-containing metal oxide and lithium borate, and
   a molar ratio of the total mass of the lithium-containing metal oxide and the lithium borate with respect to the phosphoric acid compound in the aggregate particles is 5.0 or less.
[2] The positive electrode active material according to [1], wherein a mass ratio between the single particles and the aggregate particles is from 20:80 to 50:50.
[3] The positive electrode active material according to [1] or [2], wherein the lithium-containing metal oxide includes at least one selected from the group consisting of lithium tungstate, lithium zirconate, lithium titanate, and lithium aluminate.
[4] A positive electrode plate comprising a positive electrode active material layer that includes the positive electrode active material according to any one of [1] to [3], wherein the positive electrode active material layer has a density of 3.65 g/cm³ or more.
[5] A non-aqueous electrolyte secondary battery comprising the positive electrode plate according to [4].
[6] A method of producing the positive electrode active material according to any one of [1] to [3], the method comprising:
   a first treatment step that involves coating aggregate particles with a phosphoric acid compound;
   a second treatment step that involves performing heat treatment of the aggregate particles after the first treatment step with the use of at least one selected from the group consisting of a metal oxide and boric acid as well as a lithium salt; and
   a mixing step that involves mixing the aggregate particles after the second treatment step with single particles.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic flowchart illustrating a method of producing a positive electrode active material according to the present embodiment.
Fig. 2 is a schematic view illustrating an example of a battery according to the present embodiment.
Fig. 3 is a schematic view illustrating an example of an electrode assembly according to the present embodiment.
Fig. 4 is a conceptual view illustrating a positive electrode plate according to the present embodiment.
Fig. 5 is a schematic flowchart illustrating a method of producing a positive electrode plate according to the present embodiment.

### DESCRIPTION OF THE PREFERRED EMBODIMENTS

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure.

Herein, a singular form also includes its plural meaning, unless otherwise specified. For example, "a particle" may mean not only "one particle" but also "a group of particles (powder, particles)".

### <Positive Electrode Active Material>

A positive electrode active material includes single particles and aggregate particles. With this configuration, the packing density of a positive electrode active material layer of a positive electrode plate can be easily enhanced. The positive electrode active material may consist essentially of single particles and aggregate particles. The positive electrode active material according to the present embodiment can be for a non-aqueous electrolyte secondary battery. Details of the non-aqueous electrolyte secondary battery will be described below.

The size of the single particles and the aggregate particles is not particularly limited. For example, the average particle size (D50) of the single particles may be from 1 µm to 20 µm, preferably from 1 µm to 10 µm, more preferably from 1 µm to 5 µm. For example, the average particle size (D50, D70, D30) of the aggregate particles may be from 1 µm to 40 µm, preferably from 1 µm to 30 µm, more preferably from 1 µm to 20 µm. The average particle sizes D50, D70, and D30 refer to particle sizes in volume-based particle size distribution at which the cumulative particle volume accumulated from the side of small particle sizes reaches 50%, 70%, and 30%, respectively, of the total particle volume. The average particle size may be measured by laser diffraction and scattering.

The aggregate particle may be an aggregate of primary particles. A primary particle refers to a particle whose grain boundary is not visually identified in an SEM image of the particle, and whose average primary particle size is less than 0.5 µm. The average primary particle size refers to the distance between two points located farthest apart from each other on the outline of the primary particle. The average primary particle size of the primary particles may be from 0.05 µm to 0.2 µm, or from 0.1 µm to 0.2 µm, for example. When each of 10 or more primary particles randomly selected from an SEM image of one aggregated particle has an average primary particle size from 0.05 µm to 0.2 µm, it is regarded that the average primary particle size of all the primary particles included in this aggregated particle is from 0.05 µm to 0.2 µm. The primary particles may have an average primary particle size from 0.1 µm to 0.2 µm, for example.

The single particles and the aggregate particles (primary particles) include a nickel-cobalt-manganese-based compound (hereinafter also called an NCM compound). The NCM compound included in the single particles has a ratio of nickel of 70 mol% or more, preferably 73 mol% or more, more preferably 76 mol% or more. The NCM compound included in the aggregate particles (primary particles) has a ratio of nickel of 75 mol% or more, preferably 78 mol% or more, more preferably 81 mol% or more. The ratio of nickel refers to the ratio of nickel to metallic elements except lithium.

Preferably, the NCM compound includes a nickel-cobalt-manganese composite hydroxide, more preferably a lithium-nickel-cobalt-manganese composite oxide. The nickel-cobalt-manganese composite hydroxide may be obtained by coprecipitation and/or the like, for example. The nickel-cobalt-manganese composite hydroxide may be a compound represented by the general formula NiₓCo_{y}Mn_{z}(OH)₂ (where x+y+z=1), for example. In the lithium-nickel-cobalt-manganese composite oxide, the molar ratio of lithium to nickel, cobalt, and manganese, namely Li:(Ni+Co+Mn), can be (1.0 to 12):1.0, for example.

For example, the single particles may include one, two, or more types of a first layered metal oxide represented by the following formula (1):

Li₁₋ₐ₁Niₓ₁Me¹₁₋ₓ₁O₂ (1)

[in the formula (1),
"a1" satisfies the relationship of -0.3≤a1≤0.3,
"x1" satisfies the relationship of 0.7≤x1<1.0, and
"Me¹" denotes at least one selected from the group consisting of Co, Mn, Al, Zr, Ti, V, Cr, Fe, Cu, Zn, Mo, Sn, Ge, Nb, and W].

For example, the primary particles may include one, two, or more types of a second layered metal oxide represented by the following formula (2):

Li₁₋ₐ₂Niₓ₂Me²₁₋ₓ₂O₂ (2)

[in the formula (2),
"a2" satisfies the relationship of -0.3≤a2≤0.3,
"x2" satisfies the relationship of 0.75≤x2≤1.0, and
"Me²" denotes at least one selected from the group consisting of Co, Mn, Al, Zr, Ti, V, Cr, Fe, Cu, Zn, Mo, Sn, Ge, Nb, and W].

In the formulae (1) and (2), the relationship of "x1<x2" may be satisfied, for example.

For example, the single particles may include at least one selected from the group consisting of LiNi_{0.7}Co_{0.2}Mn_{0.1}O₂, LiNi_{0.7}Co_{0.1}Mn_{0.2}O₂O₂, and LiNi_{0.8}Co_{0.1}Mn_{0.1}O₂. For example, the primary particles may include at least one selected from the group consisting of LiNi_{0.75}Co_{0.15}Mn_{0.1}O₂, LiNi_{0.75}Co_{0.1}Mn_{0.15}O₂, and LiNi_{0.8}Co_{0.1}Mn_{0.1}O₂.

For example, both the single particles and the primary particles may consist essentially of LiNi_{0.75}Co_{0.15}Mn_{0.1}O₂. For example, both the single particles and the primary particles may consist essentially of LiNi_{0.75}Co_{0.1}Mn_{0.15}O₂. For example, both the single particles and the primary particles may consist essentially of LiNi_{0.8}Co_{0.1}Mn_{0.1}O₂. For example, the single particles may consist essentially of LiNi_{0.7}Co_{0.2}Mn_{0.1}O₂ and the primary particles may consist essentially of LiNi_{0.75}Co_{0.1}Mn_{0.15}O₂. For example, the single particles may consist essentially of LiNi_{0.7}Co_{0.2}Mn_{0.1}O₂ and the primary particles may consist essentially of LiNi_{0.75}Co_{0.15}Mn_{0.1}O₂.

When the single particles include a lithium-nickel-cobalt-manganese composite oxide, the single particles can be obtained by mixing a lithium source such as, for example, lithium hydroxide with a nickel-cobalt-manganese composite hydroxide and calcining the resultant, followed by wet grinding in a ball mill and/or the like and drying. The single particles may have been surface-treated.

The aggregate particles further include a phosphoric acid compound, as well as at least one selected from the group consisting of a lithium-containing metal oxide and lithium borate (Li₃BO₃). With this configuration, breakage of the aggregate particles is reduced and thereby desired energy density tends to be achieved, and also, lithium extraction from inside the aggregate particles is reduced and thereby degradation of cycling performance tends to be reduced. The extent of lithium extraction from inside the aggregate particles can be evaluated based on the DTG peak value of a TG curve obtainable by differential thermogravimetric (DTG) measurement described in the Examples section.

The phosphoric acid compound can include lithium phosphate (Li₃PO₄) and/or the like, for example. The lithium-containing metal oxide can include at least one selected from the group consisting of lithium tungstate (Li₂WO₄), lithium zirconate (Li₂ZrO₃), lithium titanate (Li₂TiO₃), and lithium aluminate (LiAlO₂), for example. From the viewpoints of energy density and cycling performance, the aggregate particles preferably include lithium borate.

When the aggregate particles are a lithium-nickel-cobalt-manganese composite oxide, the aggregate particles can be obtained by mixing a lithium source such as, for example, lithium hydroxide, with a nickel-cobalt-manganese composite hydroxide and calcining the resultant to obtain a lithium-nickel-cobalt-manganese composite oxide (hereinafter also called a lithium composite oxide) having an aggregated structure, followed by surface treatment of the resulting lithium composite oxide having an aggregated structure with a phosphoric acid compound, and then heat treatment with the use of at least one selected from the group consisting of a metal oxide and boric acid as well as a lithium salt. Usually, when the surface of a Hi-Ni-based NCM active material is coated with a metal oxide and/or boric acid, lithium is extracted from inside aggregate particles and, thereby, a compound such as a lithium-containing metal oxide and/or lithium borate is formed. By inhibiting this reaction by performing mechanochemical treatment of the surface of a Hi-Ni-based NCM active material with the use of a phosphoric acid compound such as lithium phosphate and then performing heat treatment with the use of a metal oxide and/or boric acid as well as a lithium salt, it is conjectured to be possible to form, between the surface of the Hi-Ni-based NCM active material and the coat layer, a barrier layer made of the phosphoric acid compound and capable of reducing lithium diffusion, and, hence, lithium extraction from inside the aggregate particles can become reduced and thereby degradation of cycling performance tends to be reduced.

The method for surface treatment of the lithium composite oxide having an aggregated structure with a phosphoric acid compound can be, for example, mechanochemical treatment and the like. By performing mechanochemical treatment, it is possible to facilitate formation of a phosphoric acid compound layer on the surface of aggregate particles. The mechanochemical treatment can be a treatment that involves subjecting, in a dry mode for example, a base (particles made of the lithium composite oxide having an aggregated structure) and covering substance particles (lithium phosphate) to high-speed rotation together with a medium (zirconia beads) inside a vessel, to crush and bond the covering substance particles to the surface of the base to achieve covering. The molar ratio of the covering substance particles to the base may be from 0.01 mol% to 2.0 mol %, for example.

The method for heat treatment of the lithium composite oxide having an aggregated structure surface-treated with the phosphoric acid compound (which is also called a surface-treated lithium composite oxide) with the use of at least one selected from the group consisting of a metal oxide and boric acid (H₃BO₃) as well as a lithium salt can be, for example, a method that involves mixing the surface-treated lithium composite oxide with at least one selected from the group consisting of a metal oxide and boric acid as well as a lithium salt and heating the resultant at a temperature from 200°C to 400°C for a duration from 3 minutes to 120 minutes. Examples of the lithium salt include lithium carbonate and the like. Examples of the metal oxide include tungstic acid (H₃BO₃), zirconic acid (H₄O₄Zr), titanic acid (H₄TiO₄), aluminic acid (HAlO₂), and the like. The heat treatment time is preferably from 10 minutes to 60 minutes, from the viewpoints of energy density and cycling performance.

The molar ratio of the total mass of the lithium-containing metal oxide and the lithium borate with respect to the phosphoric acid compound in the aggregate particles (hereinafter also called the covering ratio) is 5.0 or less. The lower limit to the covering ratio may be 0.5 or more, or 0.8 or more, or 1.0 or more, for example. The upper limit to the covering ratio may be 4.0 or less, or 3.0 or less, or 2.0 or less, or 1.8 or less, for example.

The mass ratio between the single particles and the aggregate particles in the positive electrode active material may be, for example, from 20:80 to 50:50, preferably from 30:70 to 50:50. With the mass ratio between the single particles and the aggregate particles in the positive electrode active material being within the above-mentioned range, packing properties tend to be enhanced.

The DTG peak value of the positive electrode active material may be, for example, less than 3.2%/min, preferably 3.0%/min or less, more preferably 2.0%/min or less, further preferably 1.5%/min or less. The DTG peak value of the positive electrode active material is measured by a method that is described below in the Examples section.

### <Method of Producing Positive Electrode Active Material>

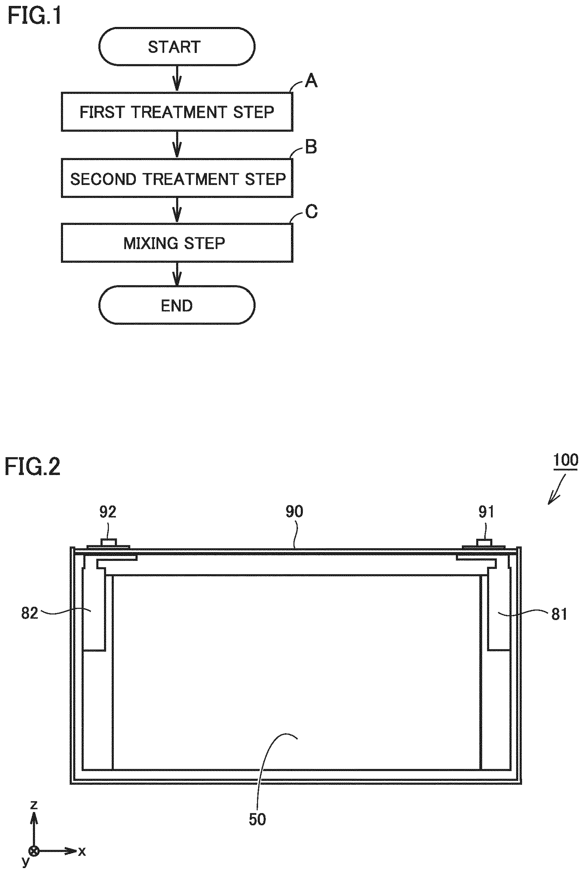

As illustrated in Fig. 1, the method of producing a positive electrode active material includes a first treatment step (A) that involves coating aggregate particles with a phosphoric acid compound by, for example, mechanochemical treatment and/or the like, a second treatment step (B) that involves performing heat treatment of the aggregate particles after the first treatment step with the use of at least one selected from the group consisting of a metal oxide and boric acid as well as a lithium salt, and a mixing step (C) that involves mixing the aggregate particles after the second treatment step with single particles. To the single particles, the aggregate particles, the phosphoric acid compound, the mechanochemical treatment, and the heat treatment, the above description applies.

### <Non-Aqueous Electrolyte Secondary Battery>

Fig. 2 is a schematic view illustrating an example of a non-aqueous electrolyte secondary battery according to the present embodiment. A battery 100 illustrated in Fig. 2 may be, for example, a lithium-ion battery as a main electric power supply or a motive force assisting electric power supply of an electric vehicle.

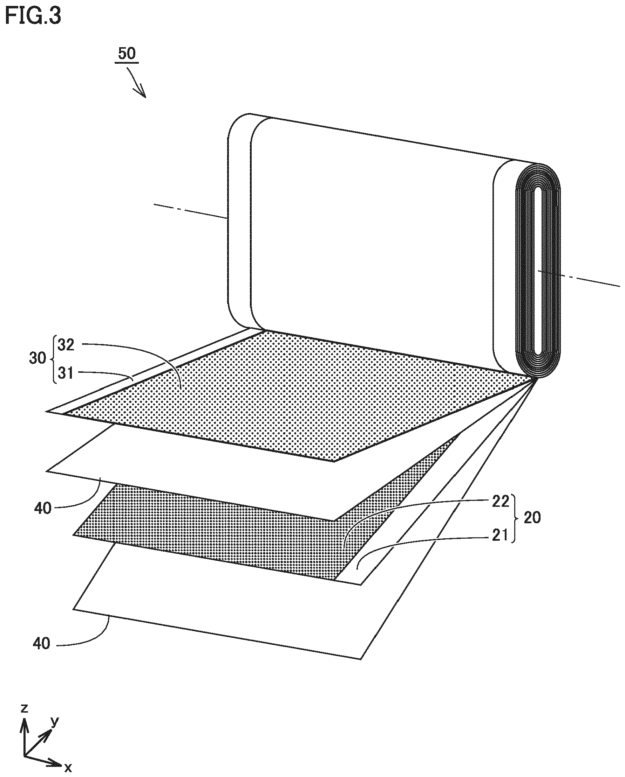

Battery 100 includes an exterior package 90. Exterior package 90 accommodates an electrode assembly 50 and an electrolyte (not illustrated). Electrode assembly 50 is connected to a positive electrode terminal 91 via a positive electrode current-collecting member 81. Electrode assembly 50 is connected to a negative electrode terminal 92 via a negative electrode current-collecting member 82. Fig. 3 is a schematic view illustrating an example of an electrode assembly according to the present embodiment. Electrode assembly 50 is a wound-type one. Electrode assembly 50 includes a positive electrode plate 20, a separator 40, and a negative electrode plate 30. That is, battery 100 includes positive electrode plate 20. Positive electrode plate 20 includes a positive electrode active material layer 22 and a positive electrode base material 21. Negative electrode plate 30 includes a negative electrode active material layer 32 and a negative electrode base material 31.

### <Positive Electrode Plate>

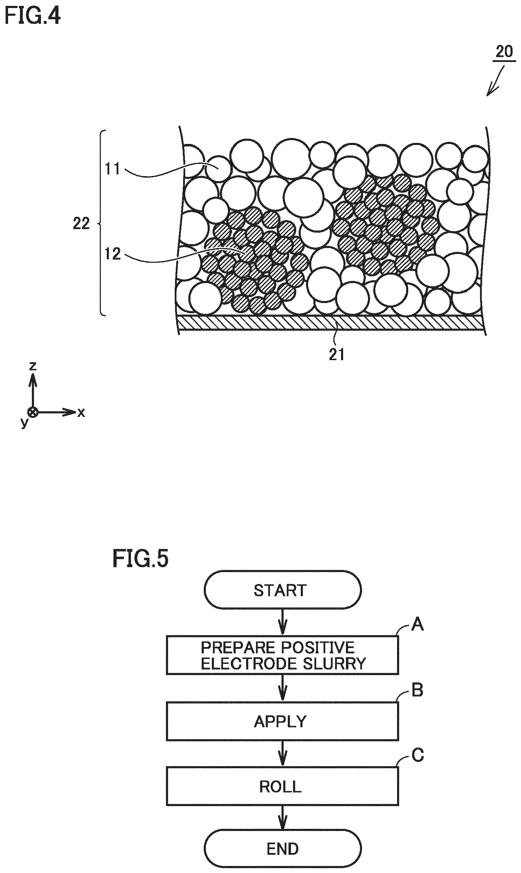

As illustrated in Fig. 4, in positive electrode plate 20, positive electrode active material layer 22 may be formed directly or indirectly on one side or both sides of positive electrode base material 21. Positive electrode base material 21 may be a conductive sheet made of Al alloy foil, pure Al foil, and/or the like, for example. Positive electrode active material layer 22 includes a positive electrode active material including single particles 11 and aggregate particles 12. Positive electrode active material layer 22 includes the above-described positive electrode active material. Positive electrode active material layer 22 may further include a conductive material, a binder, and the like.

Positive electrode active material layer 22 may have a thickness from 10 µm to 200 µm, for example. Positive electrode active material layer 22 may have a high density. The density of positive electrode active material layer 22 may be 3.65 g/cm³ or more, or 3.7 g/cm³ or more, or 3.8 g/cm³ or more, for example. The density of positive electrode active material layer 22 may be 4.0 g/cm³ or less, for example.

### <Method of Producing Positive Electrode Plate>

As illustrated in Fig. 5, the method of producing positive electrode plate 20 according to the present embodiment includes preparation of a positive electrode slurry (A), application (B), and rolling (C). In the preparation of a positive electrode slurry (A), a positive electrode slurry including the above-described positive electrode active material is prepared. The positive electrode slurry is prepared by dispersing the positive electrode active material in a dispersion medium. The dispersion medium may be an organic solvent, and the examples thereof include N-methyl-2-pyrrolidone (NMP), tetrahydrofuran (THF), dimethylformamide (DMF), methyl ethyl ketone (MEK), dimethyl sulfoxide (DMSO), and the like. The positive electrode slurry can include a conductive material and a binder. Examples of the conductive material include carbon nanotubes, carbon black such as acetylene black (AB), other carbon materials (such as graphite, for example), and the like. Examples of the binder include polyvinylidene difluoride (PVdF), polytetrafluoroethylene (PTFE), polyimide (PI), polyamide (PA), polyamide-imide (PAI), butadiene rubber (BR), styrenebutadiene rubber (SBR), nitrile-butadiene rubber (NBR), styrene-ethylene-butylene-styrene block copolymer (SEBS), carboxymethyl cellulose (CMC), a combination of these, and the like. The slurry may have a solid concentration from 40% to 80%, for example. For the mixing, any stirring apparatus, any mixing apparatus, and/or any dispersing apparatus may be used.

In the application (B), the positive electrode slurry is applied to the surface of positive electrode base material 21 to form positive electrode active material layer 22. In the rolling (C), positive electrode active material layer 22 and positive electrode base material 21 are rolled together to produce positive electrode plate 20. As a result of the rolling, a raw sheet of positive electrode plate 20 is produced. The raw sheet may be cut into a certain planar size, depending on the specifications of battery 100.

### [Examples]

In the following, the present invention will be described in further detail by way of Examples. "%" and "part(s)" in Examples refer to mass% and part(s) by mass, respectively, unless otherwise specified.

### <Example 1>

### [Production of Single Particles]

A nickel-cobalt-manganese composite hydroxide obtained by coprecipitation having a composition of Ni_{0.78}Co_{0.11}Mn_{0.11}(OH)₂ was calcined at 500°C to obtain a nickel-cobalt-manganese composite oxide (Z1). Then, lithium hydroxide and the nickel-cobalt-manganese composite oxide (Z1) were mixed together so as to achieve a molar ratio of Li to the total amount of Ni, Co, and Mn of 1.05:1, and the resulting mixture was calcined in an oxygen atmosphere at 900°C for 72 hours and then wet ground in a ball mill and dried to form a single particle structure, followed by another heat treatment in an oxygen atmosphere at 750°C for 10 hours to obtain a lithium composite oxide having a single particle structure (a composite oxide A). Measurement of particle size distribution of the composite oxide A revealed that the value of particle size (D50) was 3.6 µm, and SEM structure examination revealed that the composite oxide A was particles having substantially a single particle structure and having a particle size from 2.5 to 3.8 µm.

### [Production of Aggregate Particles]

A nickel-cobalt-manganese composite hydroxide obtained by coprecipitation having a composition of Ni_{0.83}Co_{0.05}Mn_{0.12}(OH)₂ was calcined together with lithium hydroxide at a temperature of 800°C for 10 hours in an oxygen atmosphere, followed by disintegration, and thereby a lithium composite oxide was obtained. Lithium phosphate in an amount of 0.2 mol % was added to the resultant, which was subjected to mechanochemical treatment together with ϕ-2mm zirconia balls in a P5 planetary mill manufactured by FRITSCH for a certain period of time to obtain a lithium composite oxide having an aggregated structure and covered with lithium phosphate (a composite oxide B1) (a first treatment step). Subsequently, to the resulting composite oxide B1, 0.6 wt% boric acid as well as the same molar amount of lithium carbonate were added, and heat treatment was carried out at a temperature of 300°C to obtain a lithium composite oxide having an aggregated structure and covered with a surface-covering compound, which was lithium borate (Li₃PO₄) (a composite oxide B) (a second treatment step). The covering ratio and the heat treatment time are shown in Table 1.

As for the particle size distribution of the composite oxide B, D50 was 12 µm, D70 was 14 µm, and D30 was 10 µm. As a result of SEM examination of a cross section of the composite oxide B after CP treatment, the average primary particle size of the composite oxide B was 0.13 µm.

### [Production of Positive Electrode Active Material]

The composite oxide A and the composite oxide B were mixed together in a mass ratio of 1:1 (a mixing step) to obtain a positive electrode active material of Example 1.

### <Examples 2 to 10>

Positive electrode active materials were produced in the same manner as in Example 1 except that the added compound and the surface-covering compound specified in Table 1 were used in such amounts for achieving the covering ratio as specified in Table 1, and also the treatment time in the second treatment step was changed to those specified in Table 1.

### <Comparative Example 1>

A positive electrode active material was produced in the same manner as in Example 1 except that the aggregate particles were produced by the procedure described below.

A nickel-cobalt-manganese composite hydroxide obtained by coprecipitation having a composition of Ni_{0.83}Co_{0.05}Mn_{0.12}(OH)₂ was calcined together with lithium hydroxide at 800°C for 10 hours in an oxygen atmosphere, followed by disintegration, and thereby a lithium composite oxide was obtained. To the resultant, a lithium composite oxide covered with lithium phosphate as well as 0.6 wt% boric acid and the same molar amount of lithium carbonate were added, and heat treatment was carried out at a temperature of 300°C for 5 minutes to obtain a lithium composite oxide covered with lithium borate (Li₃PO₄). The heat treatment time is shown in Table 1.

### [Production of Positive Electrode Plate]

The positive electrode active material obtained in Examples and Comparative Example, acetylene black, and polyvinylidene difluoride (PVdF) were further mixed in a solid mass ratio of 96.3:2.5:1.2, and a proper amount of N-methyl-2-pyrrolidone (NMP) was added, followed by mixing and kneading to prepare a positive electrode composite material slurry. The resulting positive electrode composite material slurry was applied to both sides of an aluminum foil core No. 1N30 having a thickness of 13 µm, and the resulting coating film was dried, followed by compression with a rolling mill to achieve a density of the composite material in the coating film of 3.7 g/cm³, and then cutting into a certain electrode size to obtain a positive electrode plate having a positive electrode composite material layer formed on both sides of the positive electrode core.

### [Production and Evaluation of Small Lithium-Ion Battery]

The resultant, together with a separator and a carbon negative electrode, were placed in this order inside a laminated exterior pouch, to which an electrolyte solution was added, and then the resultant was sealed to produce a small laminate-type battery. Batteries of Examples and Comparative Example were produced, in which the positive electrode active materials had different covering treatments as specified in the table. As for the size of the battery, eight electrode assembly layers were stacked so as to achieve a charged capacity of 600 mAh. Results of measurement of charged capacity (mAh/g) and discharged capacity (mAh/g) are shown in Table 1.

### [Evaluation of DTG Peak Value]

After charging treatment, the battery was disassembled, washed, and dried, and then from the positive electrode plate, powder-mix active material powder was scraped off, 10 mg of which was filled in an Al pan inside a glove box which had an Ar atmosphere, followed by measurement of the thermogravimetric change on a TG-DTA apparatus (manufactured by Shimadzu Corporation, DTA-60AH) at a rate of 5°C/min up to 500°C, and from the differential curve, the DTG peak value (%/min) of the active material (accompanied by oxygen release) was determined. Results are shown in Table 1.

**[Table 1]**

| | First treatment step | Second treatment step | | | Covering ratio | Charged capacity (mAh/g) | Discharged capacity (mA/g) | DTG peak value (%/min) |
|---|---|---|---|---|---|---|---|---|
| | | Treatment time (min) | Added compound | Surface-covering compound | | | | |
| Comp. Ex. 1 | No | 5 | Boric acid and lithium carbonate | Lithium borate | - | 226.3 | 206.8 | 3.2 |
| Ex. 1 | Yes | 3 | Boric acid and lithium carbonate | Lithium borate | 5.0 | 225.9 | 206.4 | 3.0 |
| Ex. 2 | Yes | 5 | Boric acid and lithium carbonate | Lithium borate | 5.0 | 225.2 | 204.3 | 1.2 |
| Ex. 3 | Yes | 10 | Boric acid and lithium carbonate | Lithium borate | 5.0 | 225.8 | 205.4 | 1.1 |
| Ex. 4 | Yes | 15 | Boric acid and lithium carbonate | Lithium borate | 5.0 | 225.9 | 205.6 | 0.9 |
| Ex. 5 | Yes | 30 | Boric acid and lithium carbonate | Lithium borate | 5.0 | 225.7 | 205.3 | 1.0 |
| Ex. 6 | Yes | 60 | Boric acid and lithium carbonate | Lithium borate | 5.0 | 225.6 | 205.3 | 1.0 |
| Ex. 7 | Yes | 120 | Boric acid and lithium carbonate | Lithium borate | 5.0 | 225.4 | 200.1 | 1.4 |
| Ex. 8 | Yes | 15 | Tungstic acid and lithium carbonate | Lithium tungstate | 5.0 | 228.3 | 204.3 | 1.2 |
| Ex. 9 | Yes | 15 | Titanic acid and lithium carbonate | Lithium titanate | 5.0 | 224.2 | 205.5 | 1.1 |
| Ex. 10 | Yes | 15 | Zirconic acid and lithium carbonate | Lithium zirconate | 5.0 | 224.5 | 206.7 | 1.0 |

Referring to Table 1, in Examples 1 to 10, as compared to Comparative Example 1, DTG peak values were low. It indicates that the positive electrode active material according to the present disclosure is capable of achieving both energy density and cycling performance.

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

## Claims

1. A positive electrode active material comprising single particles (11) and aggregate particles (12), wherein
the single particles (11) and the aggregate particles (12) include a nickel-cobalt-manganese-based compound,
the nickel-cobalt-manganese-based compound included in the single particles (11) has a ratio of nickel of 70 mol% or more,
the nickel-cobalt-manganese-based compound included in the aggregate particles (12) has a ratio of nickel of 75 mol% or more,
the aggregate particles (12) further include a phosphoric acid compound and at least one selected from the group consisting of a lithium-containing metal oxide and lithium borate, and
a molar ratio of the total mass of the lithium-containing metal oxide and the lithium borate with respect to the phosphoric acid compound in the aggregate particles (12) is 5.0 or less.

2. The positive electrode active material according to claim 1, wherein a mass ratio between the single particles (11) and the aggregate particles (12) is from 20:80 to 50:50.

3. The positive electrode active material according to claim 1 or 2, wherein the lithium-containing metal oxide includes at least one selected from the group consisting of lithium tungstate, lithium zirconate, lithium titanate, and lithium aluminate.

4. A positive electrode plate comprising a positive electrode active material layer that includes the positive electrode active material according to any one of claims 1 to 3, wherein the positive electrode active material layer has a density of 3.65 g/cm³ or more.

5. A non-aqueous electrolyte secondary battery comprising the positive electrode plate according to claim 4.

6. A method of producing the positive electrode active material according to any one of claims 1 to 3, the method comprising:
a first treatment step that involves coating aggregate particles (12) with a phosphoric acid compound;
a second treatment step that involves performing heat treatment of the aggregate particles (12) after the first treatment step with the use of at least one selected from the group consisting of a metal oxide and boric acid as well as a lithium salt; and
a mixing step that involves mixing the aggregate particles (12) after the second treatment step with single particles (11).
